# EUROPÄISCHE PATENTSCHRIFT

(11) **EP 0 305 794 B1**
(45) Veröffentlichungstag und Bekanntmachung des Hinweises auf die Patenterteilung: **07.04.1993**
(21) Anmeldenummer: 88113205.4
(22) Anmeldetag: 13.08.1988
(51) Int. Cl.: C08G 59/40, C09D 5/44

(54) **Verfahren zur Herstellung kationischer Lackbindemittel**
Process for the preparation of cationic paint binders
Procédé de préparation de liants de peintures cationiques

(30) Priorität: 03.09.1987 AT 2216/87
(43) Veröffentlichungstag der Anmeldung: 08.03.1989
(73) Patentinhaber: VIANOVA KUNSTHARZ AKTIENGESELLSCHAFT, A-8011 Graz (AT)
(72) Erfinder: Paar, Willibald, Dr., A-8010 Graz (AT); Schipfer, Rudolf, Dr., A-8010 Graz (AT)

(56) Entgegenhaltungen:
- EP-A- 0 017 215
- EP-A- 0 118 743
- EP-A- 0 199 663
- DE-A- 2 945 113
- US-A- 3 789 071
- US-A- 4 409 381

## Beschreibung

Die Erfindung betrifft ein Verfahren zur Herstellung kationischer Lackbindemittel auf der Basis von Umsetzungsprodukten von Mono-, Di- oder Polyepoxidverbindungen mit substituierten Carbaminsäurederivaten und ihre Verwendung zur Formulierung von wasserverdünnbaren Lacken, insbesonders von kathodisch abscheidbaren Lacken.

Für die Vernetzung von kationischen Bindemitteln, insbesonders auch solchen, die in kathodisch abscheidbaren Lacken Verwendung finden, ist seit langem der Einsatz von vollblockierten Polyisocyanaten bekannt (siehe z. B. US-PS 2,995,531, DE-AS 20 57 799 oder US-PS 3,799,854).

Wie bei allen Zumischungen niedrigmolekularer Harzkomponenten ist jedoch, vor allem bei der elektrischen Abscheidung, mit einer Disproportionierung des Lackmaterials zu rechnen.

Zur Vermeidung dieses Nachteils wurden eine große Anzahl von Bindemitteln entwickelt, bei welchen die Einführung von protonierbaren Gruppen über eine Aminaddition an die Epoxidgruppe oder über eine Urethanreaktion durch halbseitig aminblockierte Diisocyanate mit den Hydroxylgruppen des gegebenenfalls modifizierten Epoxidharzes oder über Veretherungsreaktionen mit entsprechenden Phenolalkylierungsprodukten erfolgt. In ähnlicher Weise werden auch vernetzbare Gruppierungen, die bei erhöhter Temperatur zur Filmbildung führen, in diese Harzsysteme eingeführt.

Es wurde nun gefunden, daß die Umsetzung von Epoxidverbindungen mit substituierten Carbaminsäurederivaten eine weitere Möglichkeit zur Einführung von basischen und/oder vernetzenden Gruppierungen darstellt. Überraschenderweise wurde dabei festgestellt, daß diese Reaktion unter der katalytischen Wirkung basischer Gruppen unter relativ milden Bedingungen abläuft und zur Bildung nichtgelierter und einwandfrei löslicher Produkte führt. Dadurch ist es in einfacher Weise möglich, eine große Anzahl funktioneller Gruppen, die für die Protonierung und Vernetzung notwendig sind oder für die Filmbildung oder für die Filmeigenschaften von Einfluß sind, in das Epoxidharz einzubauen.

Die vorliegende Erfindung betrifft demgemäß ein Verfahren zur Herstellung kationischer, nach Protonierung wasserverdünnbarer Lackbindemittel auf der Basis von modifizierten Epoxidverbindungen, welches dadurch gekennzeichnet ist, daß man
(A) eine Mono-, Di- oder Polyepoxidverbindung mit
(B) einem substituierten Carbaminsäurederivat, welches durch Umsetzung einer Isocyanatverbindung, die eine freie Isocyanatgruppe, und gegebenenfalls weitere blockierte Isocyanatgruppen, aufweist,
   (B1) mit einem aliphatischen Monoalkohol und/oder einem N,N-Dialkylalkanolamin unter Bildung eines Urethans
      oder
   (B2) mit einem aliphatischen primären Aminund/oder einem N,N-Dialkylendiamin unter Bildung eines Harnstoffs
      oder
   (B3) durch eine zusätzliche Umsetzung einer nach (B1) erhaltenen Verbindung mit einer weiteren Isocyanatverbindung, die eine freie Isocyanatgruppe, und gegebenenfalls weitere blockierte Isocyanatgruppen, aufweist, unter Bildung eines Allophanats
      oder
   (B4) durch eine zusätzliche Umsetzung einer nach (B2) erhaltenen Verbindung mit einer weiteren Monoisocyanatverbindung, die eine freie Isocyanatgruppe, und gegebenenfalls weitere blockierte Isocyanatgruppen, aufweist, unter Bildung eines Biurets
   erhalten wurde,
und wobei zumindest eine der Komponenten (A) oder (B) basische Gruppen, vorzugsweise in Form von tertiären Aminogruppen aufweist, bei 60 bis 120°C in Gegenwart eines reaktionsinerten Lösemittels zu einem epoxidgruppenfreien Produkt umsetzt, wobei gegebenenfalls ein stöchiometrischer Überschuß an Epoxidgruppen vor, gleichzeitig oder nach der Reaktion von (A) mit (B) in bekannter Weise mit Amino- und/oder Carboxyl- und/oder Hydroxylverbindungen umgesetzt wird, mit der Maßgabe, daß das Endprodukt protonierbare Gruppen entsprechend einer Aminzahl von mindestens 30 mg KOH/g aufweist.

Die Erfindung betrifft weiterhin die Verwendung der nach diesem Verfahren hergestellten Produkte als Bindemittel für wasserverdünnbare Lacke, insbesonders für kathodisch abscheidbare Elektrotauchlacke.

Soferne die Bindemittel für Elektrotauchlacke konzipiert werden, werden als Epoxidharze vor allem die handelsüblichen Diepoxidharze auf der Basis von Diphenolen, wie Diphenylolpropan, mit einem Epoxidäquivalentgewicht von ca. 190 bis ca. 1000, oder Polyepoxidharze auf Basis von Novolak-Harzen mit einem Epoxidäquivalentgewicht von ca. 170 bis ca. 250 zur Reaktion herangezogen. Anteilsweise oder für bestimmte Anwendungszwecke, z. B. als Pigmentdispergierharze, können auch aliphatische Mono-, Di- oder Polyepoxidverbindungen, beispielsweise Glycidylester von Carbonsäuren, wie den KOCH-Säuren, oder Glycidylether von Mono- oder Polyalkoholen, sowie epoxidierte Olefine oder epoxidierte Dienpolymere herangezogen werden.

Die erfindungsgemäß eingesetzten substituierten Carbaminsäurederivate werden durch Umsetzung einer Isocyanatverbindung, die eine freie Isocyanatgruppe, und gegebenenfalls weitere blockierte Isocyanatgruppen, aufweist,
(B1) mit einem aliphatischen Alkohol und/oder einem N,N-Dialkylalkanolamin unter Bildung eines Urethans
   oder
(B2) mit einem aliphatischen primären Amin und/oder einem N,N-Dialkylalkylendiamin unter Bildung eines Harnstoffs
   oder
(B3) durch eine zusätzliche Umsetzung einer nach (B1) erhaltenen Verbindung mit einer weiteren Isocyanatverbindung, die eine freie Isocyanatgruppe, und gegebenenfalls weitere blockierte Isocyanatgruppen, aufweist, unter Bildung eines Allophanats
   oder
(B4) durch eine zusätzliche Umsetzung einer nach (B2) erhaltenen Verbindung mit einer weiteren Monoisocyanatverbindung, die eine freie Isocyanatgruppe, und gegebenenfalls weitere blockierte Isocyanatgruppen, aufweist, unter Bildung eines Biurets
erhalten.

Als Monoisocyanatverbindungen kommen im wesentlichen halbblockierte Diisocyanate zur Anwendung, wobei als Ausgangsprodukte solche Diisocyanate, die zum überwiegenden Teil NCO-Gruppen mit verschiedener Reaktivität aufweisen, bevorzugt werden. Vertreter dieser Gruppe sind das 2,4-Toluylendiisocyanat (handelsüblich mit einem ca. 20%igen Anteil an 2,6-Toluylendiisocyanat, TDI) oder das Isophorondiisocyanat (3-Isocyanatomethyl-3,5,5-trimethylcyclohexylisocyanat, IPDI). Durch eine entsprechende Auswahl der Blockierungsmittel können entweder Vernetzungsfunktionen und/oder katalytisch wirksame und protonierbare Aminfunktionen in das Molekül eingeführt werden.

Ebenso lassen sich Monoisocyanatverbindungen vom Typ des Isocyanatoethylmethacrylats verwenden, wobei in diesem Fall, wie auch beim Einsatz von Hydroxyalkyl(meth)acrylaten als Halbblockierungsmittel bei Diisocyanaten, eine Vernetzungsmöglichkeit durch thermische Polymerisation gegeben ist.

Partiell blockierte Monoisocyanatverbindungen aus Polyisocyanatverbindungen, beispielsweise aus Präpolymeren von Diisocyanaten mit Polyolen, wie mit Trimethylolpropan u. a., mit Polyetherpolyolen oder mit Polyesterpolyolen, wie sie handelsüblich oder aus der Literatur bekannt sind, oder aus Produkten, wie dem Triphenylmethantriisocyanat u. ä., können auch verwendet werden. In diesen Fällen ist das Blockierungsmittel in einer Menge einzusetzen, die im Mittel eine NCO-Gruppe unverändert läßt.

Für die substituierten Carbaminsäurederivate (B1) und (B3) werden als Blockierungsmittel aliphatische Monoalkohole und/oder tertiäre Monoalkanolamine, wie N,N-Dialkylalkanolamine, eingesetzt.

Für die substituierten Carbaminsäurederivate (B2) und (B4) werden als Blockierungsmittel aliphatische primäre Amine, wie Alkylamine mit 4 oder mehr C-Atomen oder Cyclohexylamin, und/oder N,N-Dialkylalkylendiamine, wie N,N-Diethylpropylendiamin-1,3 und homologe Verbindungen, verwendet.

Die für die Reaktion der substituierten Carbaminsäure mit den Epoxidgruppen notwendige basische Katalyse erfolgt durch die in den Komponenten vorhandenen basischen Gruppen, die später nach ihrer Protonierung auch die Wasserverdünnbarkeit der Produkte bedingen.

Diese basischen Gruppen können sich sowohl am Epoxidharz, als auch an der Carbaminsäurekomponente befinden. Es ist besonders günstig, wenn die basische Gruppe als Substituent in der Carbaminsäuregruppe vorliegt. Dies wird in einfacher Weise durch die Verwendung von N,N-Dialkylalkanolaminen bzw. N,N-Dialkylalkylendiaminen bei der Herstellung der Komponente (B) erreicht.

Die Umsetzung der Komponente (A) mit der Komponente (B) erfolgt in Gegenwart eines reaktionsinerten Lösemittels bei 60 bis 120°C. Die Mengenverhältnisse der Komponenten werden so gewählt, daß das epoxidgruppenfreie Endprodukt eine für die Wasserverdünnbarkeit ausreichende protonierbare Basizität, entsprechend einer Aminzahl von mindestens 30 mg KOH/g, aufweist.

Da ein epoxidgruppenfreies Endprodukt angestrebt wird, wird ein eventueller stöchiometrischer Überschuß an Epoxidgruppen vor, während oder nach der Umsetzung mit der Komponente (B) in bekannter Weise mit Amino- und/oder Carboxyl- und/oder Hydroxylverbindungen reagiert. Diese Modifizierungsmittel können monofunktionell sein oder im Falle der Difunktionalität auch zur Kettenverlängerung bei den Epoxidharzen dienen. Eine Modifizierung kann auch durch Reaktion der im Epoxidharz vorhandenen oder durch die Reaktion mit der Komponente (B) freigesetzten sekundären Hydroxylgruppen mit Isocyanatverbindungen erfolgen.

Da es sich bei den Reaktanten um mehrfunktionelle Verbindungen handeln kann, müssen bei der Formulierung die dem Fachmann geläufigen Überlegungen berücksichtigt werden, durch die ein Gelieren oder Unlöslichwerden des Ansatzes verhindert wird.

Die weitere Verarbeitung der erfindungsgemäßen Produkte zu wasserverdünnbaren Lacken unter Verwendung von Pigmenten, Füllstoffen, Zusatz- und Hilfsstoffen ist, ebenso wie die Anwendung der Lacke, insbesonders die Elektrotauchlackierung, in der Literatur beschrieben und bedarf keiner weiteren Erläuterung. Soweit notwendig, sind die entsprechenden Angaben den Beispielen zu entnehmen.

Die folgenden Beispiele erläutern die Erfindung, ohne sie in ihrem Umfang zu beschränken. Alle Angaben in Teilen oder Prozenten, beziehen sich soferne nichts anderes angegeben ist, auf Gewichtseinheiten.

Die Abkürzung EEW bedeutet Epoxidäquivalentgewicht, d. h. die 1 Mol Epoxidgruppen enthaltende Menge eines Produkts in Gramm.

### Beispiel 1: (Umsetzung eines Epoxidharzes mit einer Urethan-Verbindung)

117 Tle N,N-Diethylethanolamin (1 Mol) werden in 200 Tlen Diethylenglykoldimethylether (DGDME) bei 30 bis 35°C mit 304 Tlen (1 Mol) eines mit 2-Ethylhexanol halbblockierten TDI bis zu einem NCO-Wert von Null umgesetzt. Nach Zugabe von 475 Tlen eines Bisphenol A-Epoxidharzes (EEW 475) wird die Temperatur auf 75 bis 80°C erhöht und diese Temperatur 2 Stunden gehalten. Das Reaktionsprodukt weist keine Epoxidgruppen auf und ist nach Zusatz von 55 mMol Ameisensäure /100 g Festharz einwandfrei wasserverdünnbar.

### Beispiel 2: (Umsetzung eines Epoxidharzes mit einer Harnstoff-Verbindung und anschließende Modifikation von sekundären Hydroxylgruppen mit einer Isocyanatverbindung)

130 Tle N,N-Diethylaminopropylamin (1 Mol) werden in 186 Tlen Toluol mit 304 Tlen (1 Mol) eines mit 2-Ethylhexanol halbblockierten TDI bei 30 bis 40°C vollständig umgesetzt. Nach Zugabe von 190 Tlen eines Bisphenol A-Epoxidharzes (EEW 190) wird der Ansatz 2 Stunden bei 70°C reagiert. Anschließend werden die sekundären Hydroxylgruppen des Reaktionsproduktes mit weiteren 304 Tlen (1 Mol) des oben angeführten halbblockierten TDI bis zum vollständigen Verbrauch aller Isocyanatgruppen umgesetzt. Das Toluol wird unter Vakuum abdestilliert und durch die gleiche Menge Methoxypropanol ersetzt. Das Bindemittel ist nach Zusatz von 40 mMol Ameisensäure/100 g Festharz einwandfrei wasserverdünnbar.

### Beispiel 3: (Umsetzung eines Epoxidharzes mit einer Allophanat-Verbindung)

In gleicher Weise wie in Beispiel 1 werden 89 Tle N,N-Dimethylethanolamin (1 Mol) mit 496 Tlen (2 Mol) eines mit n-Butanol halbblockierten TDI in 300 Tlen N-Methylpyrrolidon umgesetzt. Nach Zugabe von 950 Tlen eines Bisphenol A-Epoxidharzes (EEW 950) wird der Ansatz 2 Stunden bei 75°C reagiert. Das Reaktionsprodukt weist keine Epoxidgruppen auf und ist nach Zusatz von 50 mMol Essigsäure/100 g Festharz einwandfrei wasserverdünnbar.

### Beispiel 4: (Umsetzung eines Epoxidharzes mit einer Biuretverbindung)

102 Tle N,N-Dimethylaminopropylamin (1 Mol) werden in 400 Tlen DGDME gelöst und mit 624 Tlen (2 Mol) eines mit Ethylenglykolmonomethylether halbblockierten Isophorondiisocyanats bis zum vollständigen Verbrauch aller Isocyanatgruppen umgesetzt. Nach Zugabe von 488 Tlen (1 Mol; entsprechend 2,0 Mol NH-Gruppen) eines Umsetzungsproduktes aus 1 Mol 1,6-Hexamethylendiamin und 2 Mol 2-Ethylhexylglycidylether und 1425 Tlen (3 Val) eines Bisphenol A-Epoxidharzes (EEW 475) wird der Ansatz 3 Stunden bei 90°C reagiert. Das Bindemittel ist nach Zusatz von 50 mMol Ameisensäure/100 g Festharz einwandfrei wasserverdünnbar.

## Patentansprüche

1. Verfahren zur Herstellung kationischer, nach Protonierung wasserverdünnbarer Lackbindemittel auf der Basis von modifizierten Epoxidverbindungen, dadurch gekennzeichnet, daß man
(A) eine Mono-, Di- oder Polyepoxidverbindung mit
(B) einem substituierten Carbaminsäurederivat, welches durch Umsetzung einer Isocyanatverbindung, die eine freie Isocyanatgruppe, und gegebenenfalls weitere blockierte Isocyanatgruppen, aufweist,
(B1) mit einem aliphatischen Monoalkohol und/oder einem N,N-Dialkylalkanolamin unter Bildung eines Urethans
oder
(B2) mit einem aliphatischen primären Amin- und/oder einem N,N-Dialkylendiamin unter Bildung eines Harnstoffs
oder
(B3) durch eine zusätzliche Umsetzung einer nach (B1) erhaltenen Verbindung mit einer weiteren Isocyanatverbindung, die eine freie Isocyanatgruppe, und gegebenenfalls weitere blockierte Isocyanatgruppen, aufweist, unter Bildung eines Allophanats
oder
(B4) durch eine zusätzliche Umsetzung einer nach (B2) erhaltenen Verbindung mit einer weiteren Monoisocyanatverbindung, die eine freie Isocyanatgruppe, und gegebenenfalls weitere blockierte Isocyanatgruppen, aufweist, unter Bildung eines Biurets
erhalten wurde,
und wobei zumindest eine der Komponenten (A) oder (B) basische Gruppen, vorzugsweise in Form von tertiären Aminogruppen aufweist, bei 60 bis 120°C in Gegenwart eines reaktionsinerten Lösemittels zu einem epoxidgruppenfreien Produkt umsetzt, wobei gegebenenfalls ein stöchiometrischer Überschuß an Epoxidgruppen vor, gleichzeitig oder nach der Reaktion von (A) mit (B) in bekannter Weise mit Amino- und/oder Carboxyl- und/oder Hydroxylverbindungen umgesetzt wird, mit der Maßgabe, daß das Endprodukt protonierbare Gruppen entsprechend einer Aminzahl von mindestens 30 mg KOH/g aufweist.

2. Verfahren nach Anspruch 1, dadurch gekennzeichnet, daß die in der Epoxidverbindung vorhandenen oder durch die Reaktion der Epoxidverbindung mit der Komponente (B) freigesetzten sekundären Hydroxylgruppen mit Isocyanatverbindungen vollständig umgesetzt werden.

3. Verwendung der nach den Ansprüchen 1 und 2 hergestellten kationischen Bindemittel zur Formulierung von wasserverdünnbaren Lacken, insbesonders von kathodisch abscheidbaren Elektrotauchlacken.

## Claims

1. Process for the Preparation of cationic paint binders based on modified epoxy compounds, which paint binders are water-dilutable after protonation, characterised in that
(A) a monoepoxy, diepoxy or polyepoxy compound is reacted with
(B) a substituted carbamic acid derivative, which has been obtained by reacting an isocyanate compound, which contains a free isocyanate group and optionally further blocked isocyanate groups,
(B1) with an aliphatic monoalcohol and/or a N,N-dialkylalkanolamine, with the formation of a urethane, or
(B2) with an aliphatic primary amine and/or a N,N-dialkylenediamine, with the formation of a urea, or
(B3) by an additional reaction of a compound obtained according to (B1) with a further isocyanate compound which contains a free isocyanate group and optionally further blocked isocyanate groups, with the formation of an allophanate, or
(B4) by an additional reaction of a compound obtained according to (B2) with a further monoisocyanate compound which contains a free isocyanate group and optionally further blocked isocyanate groups, with formation of a biuret,
and at least one of the components (A) or (B) containing basic groups, preferably in the form of tertiary amino groups, at 60 to 120°C in the presence of a solvent which is inert in respect of the reaction, to give a product free from epoxide groups, a stoichiometric excess of epoxide groups optionally being present and being reacted, simultaneously with or following the reaction of (A) with (B), in a known manner with amino and/or carboxyl and/or hydroxyl compounds, with the proviso that the end product contains protonatable groups corresponding to an amine number of at least 30 mg KOH/g.

2. Process according to Claim 1, characterised in that all of the secondary hydroxyl groups present in the epoxy compound or liberated by the reaction of the epoxy compound with the component (B) are reacted with isocyanate compounds.

3. Use of the cationic binders prepared according to Claims 1 and 2 for the formulation of water-dilutable paints, in particular of cathodically depositable electrodip paints.

## Revendications

1. Procédé de préparation de liants de peintures cationiques pouvant être dilués dans l'eau après protonation, à base de composés époxy modifiés, caractérisé en ce que l'on fait réagir
(A) un compose mono-, di- ou polyépoxy avec
(B) un dérivé d'acide carbamique substitué qui a été obtenu par réaction d'un composé d'isocyanate qui présente un groupe isocyanate libre et éventuellement d'autres groupes isocyanate bloqués,
(B1) avec un monoalcool aliphatique et/ou une N,N-dialkylalcanolamine avec formation d'un uréthane, ou
(B2) avec une amine aliphatique primaire et/ou une dialkylènediamine avec formation d'une urée ou
(B3) par une nouvelle réaction d'un composé obtenu selon (B1) avec un autre composé d'isocyanate qui présente un goupe isocyanate libre et éventuellement d'autres groupes isocyanate bloqués, avec formation d'un allophanate, ou
(B4) par une nouvelle réaction d'un composé obtenu selon (B2) avec un autre composé de monoisocyanate qui comprend un groupe isocyanate libre et éventuellement d'autres groupes isocyanate bloqués, avec formation d'un biuret,
au moins l'un des constituants (A) ou (B) comportant des groupes basiques, de préférence sous forme de groupes amino tertiaires, à une température de 60 à 120°C en présence d'un solvant inerte pour la réaction, pour donner un produit sans groupes époxy, en faisant éventuellement réagir de façon connue un excès stoechiométrique de groupes époxy, avant, en même temps ou après la réaction de (A) avec (B), avec des composés aminés et/ou carboxylés et/ou hydroxylés, sous réserve que le produit final contienne des groupes pouvant être protonés correspondant à un indice d'amine d'au moins 30 mg KOH/g.

2. Procédé selon la revendication 1, caractérisé en ce que les groupes hydroxyle secondaires présents dans le conposé époxy ou libérés par la réaction du composé époxy avec le constituant (B) réagissent complètement avec les composés d'isocyanate.

3. Application des liants cationiques préparés selon les revendications 1 et 2 à la formulation de peintures pouvant être diluées dans l'eau, en particulier de peintures applicables par électro-immersion déposables à la cathode.
